Europäisches Patentamt

European Patent Office

Office européen des brevets

(19)

(11) Publication number: **0 118 670 B1**

# EUROPEAN PATENT SPECIFICATION

(45) Date of publication of patent specification: 03.04.91  (51) Int. Cl.⁵: **G06F 13/18**, G06F 13/20

(21) Application number: **84100448.4**

(22) Date of filing: **17.01.84**

(54) **Priority system for channel subsystem.**

(30) Priority: **14.02.83 US 465953**

(43) Date of publication of application:
**19.09.84 Bulletin 84/38**

(45) Publication of the grant of the patent:
**03.04.91 Bulletin 91/14**

(84) Designated Contracting States:
**DE FR GB**

(56) References cited:
**US-A- 3 699 530**
**US-A- 3 812 473**
**US-A- 4 126 897**

(73) Proprietor: **International Business Machines Corporation**
**Old Orchard Road**
**Armonk, N.Y. 10504(US)**

(72) Inventor: **Capowski, Robert Stanley**
**Milewood Road**
**Verbank, N. Y. 12585(US)**
Inventor: **Zimmerman, Terrence Keith**
**R. D. No. 2, Box 415**
**Red Hook, N. Y. 11571(US)**

(74) Representative: **Rudolph, Wolfgang, Dipl.-Ing.**
**IBM Deutschland GmbH Schönaicher Strasse 220**
**W-7030 Böblingen(DE)**

## Description

This invention relates to a priority system according to the preamble of claim 1.

In a data processing system there are many applications where a system resource (such as main memory) has several users (such as channels) that contend for access to the resources. Apparatus that resolves this contention can be called a priority circuit. Although a channel subsystem is a conventional part of a data processing system and is well known, it will be helpful to review the features and the terminology of a system that particularly illustrates an application for this invention.

In a simple system a single computing engine might issue orders to a disk controller to transfer data and a program into processor store, and the same engine might then execute the program on the data in main store. For a number of reasons there are commonly two separate engines, one for the I/O operations and one for the arithmetic and logic operations for executing a program in main memory. In a system of the type that would use this invention, several computing engines handle different parts of the I/O operation. One of these processors is called an I/O processor or IOP and there are several processors that are called channel processors or CP's.

Generally, the central processor handles the I/O operations that directly relate to a users program and the IOP and the CP's handle the operations of transferring data between the I/O devices and the memory of the central processor. The CP's handle the actual transfers into and out of processor memory, including the operations with the device controllers. The IOP handles general parts of the I/O operation such as communicating with the central processor, scheduling the I/O jobs, and handling the ending status of the CP's. The IOP communicates with the central processor for operations such as getting control blocks that the central processor prepares to begin I/O operations and for reporting status conditions that are handled by the central processor instead of by the IOP. The CP's communicate with the central processor storage for storing data from an I/O device and for fetching data that is to be stored on an I/O device or for fetching channel programs that are executed by the CP's.

The IOP and the CP's also communicate with each other. The IOP signals a particular CP when an I/O job is to be performed and the CP signals the IOP when the job has been completed or when some other general operation is to be performed by the IOP. These communications are commonly carried out over signal wires that run between the IOP and the CP's or by the processor storage.

The prior art is exemplified by the following two U.S. Patents: 3,657,483 and 3,557,315. Both patents disclose schemes for balancing asynchronous traffic loads between plural central processors and commonly accessible peripherals but not between channels of a central processor serving mutually exclusive peripheral loads.

In the US-A-3 699 530 is an input/output system with dedicated channel buffering described, which shows means for signalling the availability of resources, means for signalling a request for one or more of that resources by a requester and which shows priority resolution of requests from channels controls for the use of the in bus from the channel to the storage control unit independently of subsequent priority resolution for use of the main storage. This priority system has not enough flexibility which solves a critical channel/processor operation.

The description of the I/O subsystem can be simplified by introducing terminology from a specific system that would use the priority circuit of this invention. In this system, a large number of CP's communicate with processor memory through a system of buffer memories that are arranged in an upwardly pointing funnel shape with a succession of stages in which there are fewer busses than in the stage below but the busses are either wider or faster.

One stage of this system, called the secondary data stager, has two similar component groups each called a secondary data stager or SDS. The IOP and the two SDS's connect to processor memory and to each other through the uppermost stage which is called the primary data stager or PDS. Thus, contention between the CP's and the IOP for access to main memory can be described in terms of contention between just the IOP and the two SDS's. In this system, the PDS provides the communications path between the IOP and the two SDS's, and these components also contend for access to these interconnecting data paths. In the PDS of this I/O subsystem, a priority circuit is required because some of the operations of the CP's have critical timing. When data is being transferred to or from a disk storage device, the data path to main memory is given to the disk controller operation can take place. If the system resources are not available at this point in time for some reason, the operation must be delayed until the disk has completed a revolution. In this situation the system has the delay of waiting for a revolution of the disk of these operations must be repeated.

Therefore, the object of this invention is to provide a new priority system in which a critical CP operation is unlikely to be delayed because a less critical operation of the IOP is taking place and to prevent a large number of CP's from being delayed because one CP is blocking the IOP from adequate access to main memory. Under different operating conditions, there are changes in the relative needs of the IOP and the SDS's, and a more specific object of this invention is to provide a system that permits an IOP and an SDS (or 2 SDS's) to be given a relative priority on a selectable basis.

The object is achieved particularly by the characterizing part of claim 1.

Improvements of the solution are achieved by the priority system of the characterizing parts of claims 2 to 6.

This invention provides a priority circuit that permits a selectable relative priority between the SDS's and the IOP for access to the system resources. An SDS or the IOP signals a request for a particular resource. Each resource conventionally provides a busy/available signal. In a first stage of the priority circuit the requests for particular resources are matched with the availability of these resources, and requests are signalled only for the contenders for resources that are available. In a second stage of the circuit, access is granted to the requester having the highest priority. The order of priority for the three contenders is changed in a cycle that contains a variable number of steps. The overall lowest priority contender, the IOP, is given highest priority in one of the steps, and top priority alternates between the two SDS's on the other steps.

In the specific circuit that will be described, a counter is arranged to count through a full cycle of seven steps or through a smaller number of steps. Each step has a particular order of priority.

For further comprehension of the invention, and of the objects and advantages thereof, reference will be made to the following description and accompanying drawings and to the appended claims in which the various novel features of the invention are more particularly set forth.

In the accompanying drawings forming a material part of this disclosure:

Fig. 1     is a block diagram of a primary data stager and related components of a data processing system.

Fig. 2     is a schematic diagram of a circuit in the primary data stager that identifies an available system resource that is matched by one of the requests by a single user.

Fig. 3     is a schematic diagram of a circuit that receives requests from the circuit of Fig. 2 and controls access to resources of the primary data stager.

## THE PREFERRED SYSTEM

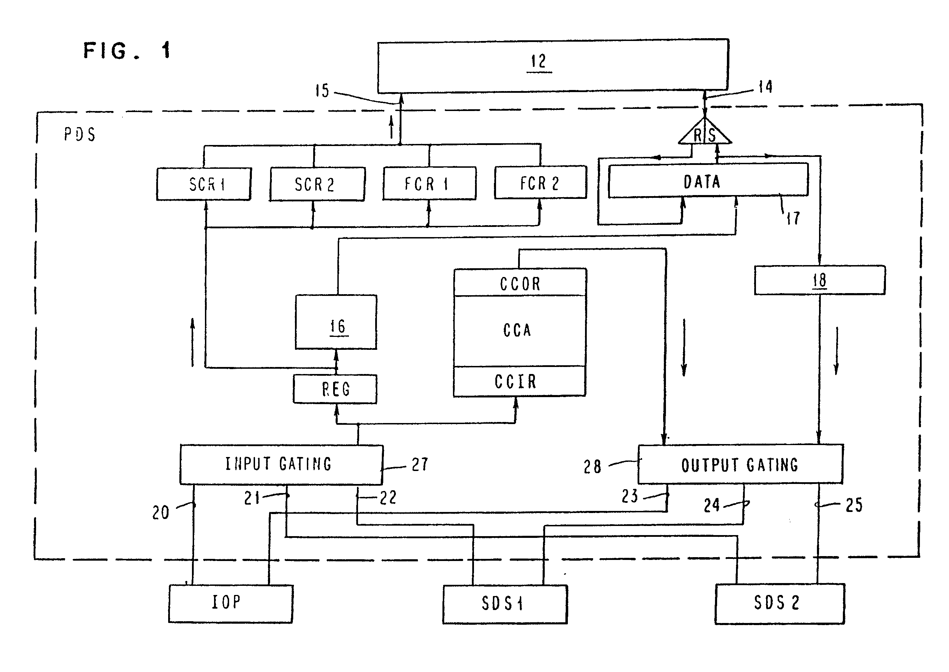

### Introduction -- Fig. 1

Fig. 1 shows a central processor complex that includes a central processor, a processor memory, and a circuit that controls access to the memory by the processor and by the I/O subsystem. The invention is useful with a wide variety of data processing systems, and in Fig. 1 these components are represented by a functional block 12. The IOP and SDS1 and SDS2 which have been described earlier are also represented by functional blocks.

A primary data stager PDS is connected to the memory controller by a bidirectional data bus 14 and by an address and control bus 15. A data buffer 16 and a data register 17 are connected in the path of the data bus 14 for input to the processor and data registers 17 and 18 are connected in the path for output from the processor. Store request registers SCR1 and SCR2 and fetch request registers FCR1 and FCR2 are connected in the path of address and control bus 15 to the processsor.

Data is transferred on memory bus 14 on successive cycles of the system operations (unless there is no pending transfer). On a store cycle, data from register 17 are placed on bus 14 and the associated address and control information from register SCR1 or SCR2 are placed on bus 15. On fetch cycles, addresses and other information from FCR1 or FCR2 are placed on bus 15 and subsequently data is transferred on memory bus 14 to register 17.

The priority circuit that will be described controls access by the IOP and the SDS's to SCR 1 and 2 and FCR 1 and 2 and the other components operate according to the contents of these registers without regard to priority.

The IOP and each SDS are connected to the PDS by separate input busses 20, 21 and 22 and output busses 23, 24, and 25. The three input busses are combined in a circuit 27 and the three output busses are split from a circuit 28. These circuits are conventional and do not require specific description.

The Channel Communicator Array CCA of copending application EP-A-0118670 of Blount et al. provides communications between the IOP and the 'SDS's. The priority circuit of this invention controls access to the data input register CCIR of the CCA.

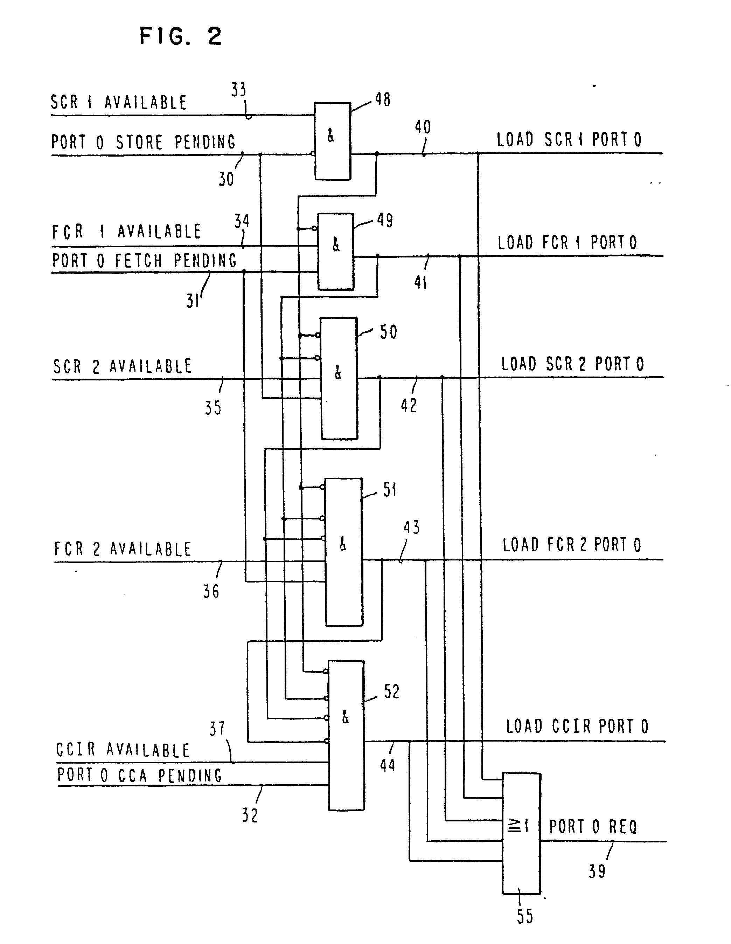

The Request Matching Circuit of Fig. 2 -- Introduction

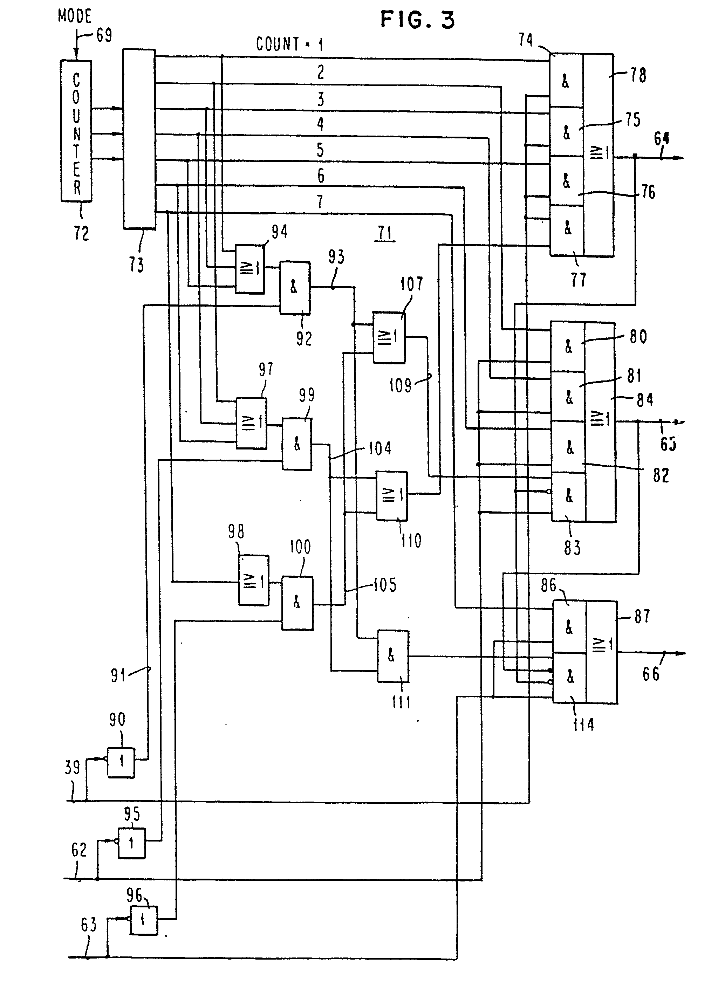

It will be convenient to describe the logic circuits of Fig. 2 and 3 for the case in which a logical 1 is represented by an up level on a signal line and a logical 0 is represented by a down level.

Fig. 2 shows a port of the PDS that receives one or more requests by SDS1 and matches these requests with the system resources that are available. The PDS has two other ports for SDS2 and the IOP that are identical to the port of Fig. 2 except for differences in their input and output connections. Port 0 receives signals on lines 30, 31, and 32 that identify requests by SDS 1 for access to the system resources: Fetch Request Pending, Store Request Pending, and CCA Operation Pending. It receives corresponding signals on lines 33 to 37 that tell whether the system resources are available or busy: SCR1 Available, SCR2 Available, FCR1 Available, FCR2 Available, and CCA Input Register (CCIR) Available. The other ports receive corresponding request signals and receive the same availability signals. The port produces one output signal on a line 39 that indicates that a request has been made and has been matched, and it produces a control signal on one of lines 40 to 44 for identifying the resource for which a request has been matched.

The Circuit of Fig. 2

The request and availability matching function that has just been described is implemented in the circuit of Fig. 2 by a system of AND logic gates 48-52. The gates are arranged in a column in the drawing to illustrate a hierarchy for accepting a request signal and the corresponding availability signal. This arrangement is illustrated by gate 48 which receives the signals Port 0 Store Pending and SCR1 Available on lines 30 and 33. On the coincidence of these signals, gate 48 produces an output signal Load SCR1 Port 0 on line 40. Each other gate 49-52 similarly receives a request signal and the corresponding availability signal. In addition, the output 40-43 of each gate except the last gate 52 is connected to inhibit the output of each gate below it in the column. (Circles in the drawing represent a logic invert function which causes a 1 logic value at an output of a control line 40-44 to appear as a 0 logic value at an input for an inhibiting function in an AND gate.)

Lines 30-32 from SDS1 are physically distinct conductors that each carry an individual request signal, and it is possible for SDS1 to have simultaneously pending requests for any of the resources. However, the PDS and the priority circuit of Fig. 3 handle only one request on each cycle. The inhibit connection from the output of an AND gate to the inputs of the lower gates permits pending requests from the SDS to be accepted in a order of priority i.e. SCR1, FCR1, SCR2, FCR2.

The circuit of Fig. 2 also has an OR circuit 55 that produces a signal Port 0 Request that signifies that the SDSI has made a request that has been matched by an available resource. Thus, this signal is a generalized request for an available resource without regard to the specific identification of the resource. As will be described next, the circuit of Fig. 3 receives these generalized requests and grants access to the requester with the highest priority for the cycle.

The Apparatus of Fig. 3 -- Introduction

The circuit of Fig. 3 receives the generalized request on line 39 from port 0 which was described in the preceding section, and it receives corresponding signals on lines 62 and 63 from ports 1 and 2. Requests from the three ports are independent and on any particular request cycle the three request lines 39, 62, 63 can have 1 or 0 values in any combination. Unless there are no requests, the circuit of Fig. 3 produces a signal on one of lines 64, 65, or 66 to grant access to one of the ports to whatever resource has been matched in its circuit of Fig. 2. The circuit of Fig. 3 comprises a combinatorial logic network that resolves requests on a priority basis and a set of control lines 71 and a counter 72 and decoder 73 that step an enabling signal along the lines to control the logic network to produce different priority orders with each step. The circuit of Fig. 3 also receives a two bit code 69 and the counter includes means responsive to the mode bits to change its counting sequence to thereby change the relative priority of the IOP and SDS 1 and 2.

The components of the drawing will be introduced as they appear in the description of the following

4

operations.
1. Full priority counting cycle, access requested by the first priority port.
2. Full priority counting cycle, access granted by default to a lower priority port.
3. Several shortened priority counting cycles.

## The Logic Gates in the Full Count Cycle

In the priority operations that will be described in this section, the counter operates through a full count of seven steps. On each step the three ports have a particular sequence of priority. The preferred sequence is as follows.

### TABLE 1

| Count | Priority Order |
|-------|----------------|
| 1 | SDS 0, SDS 1, IOP |
| 2 | SDS 1, SDS 0, IOP |
| 3 | SDS 0, SDS 1, IOP |
| 4 | SDS 1, SDS 0, IOP |
| 5 | SDS 0, SDS 1, IOP |
| 6 | SDS 1, SDS 0, IOP |
| 7 | IOP, SDS 0, SDS 1 |

Thus, it can be seen that in a full priority cycle (1) the two SDS's get first priority and second priority in six of the seven steps and (2) the two SDS's have substantially the same number of first and second priorities. (In the single step of top priority for the IOP, Port 0 is arbitrarily given second priority and Port 1 is assigned third priority. To look ahead in this description, the relative priority of the SDS's and the IOP depends on the length of the counting cycle, and means is provided to shorten the count in a way that changes the relative priority and keeps the priority of Ports 0 and 1 closely equal.

Suppose that the counter has produced a 1 logic level signal on its output line Count = 1 and that a there is a 1 logic level on line 39 that signifies that Port 0 has a request to access an available resource. In this situation, an AND gate 74 receives the request from Port 0 on line 39 and the signal Count = 1 and in response to the coincidence or these signals it cooperates with an OR gate 78 to produce the enabling signal for Port 0 on line 64.

Similarly, AND gates 75 and 76 receive the signals Count = 3 and Count = 5 and cooperate with OR gate 78 to grant a request by Port 0 on counts 3 and 5 of the counting cycle. (AND gate 77 will be described later.)

AND gates 80-82 and OR gate 84 are similarly arranged to grant priority to Port 1 on line 65 on the coincidence of a request by Port 1 on line 62 and the signals Count = 2, 4, or 6. Similarly, and AND gate 86 and an OR gate 87 grant priority to Port 2 on line 66 on a request by Port 2 on line 63 for Count = 7.

## The Default Priority Operation

Suppose that Count = 1 and that Port 1 has made a request but that Port 0 has not made a request. The circuit of Fig. 3 operates to grant priority by default to Port 1, as is set out in Table 1. In some respects the components for all default conditions are similar, and these components will be described as the operation is described for the default from Port 0 to Port 1. In other respects the components reflect the asymmetry of Table 1 and will be described separately.

In this example, AND gates 74-76 in the circuit for Port 0 are inhibited by the down level of the signal on line 39. AND gates 80-82 for Port 1 are inhibited by the down levels of the signals Count = 2, 4 or 6. As will be explained next, AND gate 83 responds to its three input signals to produce a grant signal at the output 65 of OR gate 84.

An Invert circuit 90 inverts the request from Port 0 on line 39 to produce a signal on a line 91, No Request From Port 0. An AND gate 92 responds to this signal and to the signal Count = 1 to produce an output on line 93, Default from Port 0. An OR gate 94 transmits the signal Count = 1 to AND gate 92 and similarly receives the signals Count = 3 and Count = 5 which identify other steps in which Port 0 has first priority and conversely identify times for default priority from Port 0. Similarly, Invert circuits 95, 96, OR gates 97, 98 and AND gates 99 and 100 form default signals on lines 104 and 105 for steps in which Port 1 or Port 2 would otherwise have first priority.

An OR gate 107 receives the signal Default from Port 0 priority from gate 92 and it also receives the corresponding signal Default from Port 2 on line 105 and it produces an output on a line 109 that signifies that either Port 0 or Port 2 (or both) have defaulted. OR gates 110 and 111 form corresponding signals that signify that a default has occurred in the combination Ports 1 or 2 or Ports 0 or 1.

AND gate 77 for Port 0 receives the output of OR gate 110, and a request by Port 0 on line 39 produces a grant signal on line 64 in any case of default from first priority by any other port.

AND gate 83 for Port 1 receives the default signal from OR gate 107 but it also receives an inhibiting input from OR gate 78 if Port 0 has made a request. This combination of signals is logically equivalent to (-(Step 1, 3, 5) AND Not (Request by Port 0)) OR (Step 7 AND Not (request by Port 0 OR Port 2)). Thus, the default priority is port 0, 1, 2.

AND gate 114 for Port 2 receives the signal for a default from either Port 0 or Port 1 from OR gate 111 and it also receives inhibiting inputs from lines 64 and 65 that signify by an up level after inversion that a request has not been granted to either Port 0 or Port 1. This combination of signals is logically equivalent to ((Step 1, 3, or 5) AND NOT (Request by Port 0)) OR ((Step 2, 4 or 6) AND NOT (Request by Port 1)).

Other Count Cycles

Table 2 shows the counting sequence for counting cycles 3, 4, and 5 steps and also shows the mode control bits for all four counting sequences.

## TABLE 2

| Priority Register | Counter Sequence |
|---|---|
| 00 | 1, 4, 7 |
| 01 | 1, 3, 4, 7 |
| 10 | 1, 2, 3, 4, 7 |
| 11 | (See Table 1) |

In the sequence established by mode bits 00, Port 0 and Port 1 receives first or second priority on two of the three steps. Similarly, in the sequence of mode bits 01, Port 0 and Port 1 receive first or second priority on three of the four steps. In each sequence, the relative priority between ports 0 and 1 is made slightly asymmetrical by the single step in which Port 2 has first priority, and in the sequence for mode bits 01 the relative priority is made somewhat more unsymmetrical by the fact that there are an even number of total count steps and an odd number of steps to be divided between ports 0 and 1. This asymmetry will ordinarily not be apparent to a user of the system.

The Counter and the Mode Selecting Operation

The preferred counter is a simple series of three interconnected latch stages with controlled interstage coupling that selectively cause the latch to advance from an existing count to a selected next count. For example, when the counter is controlled by mode bits 11, the latch advances from count 100 (decimal 4) to count 101 (decimal 5) by the familiar operation of interstage coupling that flips the rightmost bit and conditionally flips certain adjacent bits. Similarly, in modes 00, 01 or 10, the counter advances from count 100 to count 111 (decimal 7) by flipping two rightmost bits. Counters for various sequences are well known and will be readily understood from these examples.

From a more general standpoint, a counter is a sequential circuit, that responds to a stepping signal that is formed from a clock of the I/O subsystem, and it responds also to its existing state to advance to the next counting step in the sequence. A wide variety of devices provide this general function.

## Claims

1. Priority system for use in the channel subsystem of a data processing system with means for signalling the availability of resources (33-37), means for signalling a request for one or more of said resources by a requester (30-32), and means (48-53) for matching the requests and the availability signals and signalling a generalized request (line 39), that is without specific identification of the resource by the requester if a match is found, characterized

by logic circuits and lines for granting an operating cycle to a requester on the basis of one of a set of priority orders among the requesters, stepping means for stepping the circuit means through the cycle of priority orders, and means for changing the stepping sequence,

by means responsive to a generalized request (39, 62, 63) for granting access (64-66) to a requester on the basis of a selected one of said set of priority orders, means (72 and 73) for controlling said granting means to operate according to a particular priority order and for stepping said granting means through said set of priority orders in which one requester (IOP on line 63) has highest priority only once and another requester (SDS1 on line 39 or SDS2 on line 62) has highest priority several times, and

by means (69) for signalling said controlling means (72 and 73) to omit selected ones of the steps in which said one requester has highest priority, whereby the relative priority of the requesters over a cycle of steps is made variable.

2. A priority system for a data processing system according to claim 1, characterized by

circuit means for each requester (30-32) for matching requests for access to one or more resources (33-37) with the availability of resources, and means for signaling a general request, that is without specific identification of the resource for the associated requester when a match has been found,

by means responsive to the general request signals from each of the requesters (30-32) for granting access to one requester,

by a plurality of signal lines (39, 62, 63, 69) and means (Fig. 2) for producing a signal on the lines one at a step in a first predetermined sequence in which each line carries a signal for one step of resource allocation in a repeating cycle of steps, each line corresponding to a particular order of priority among the requesters,

by said first set of priority orders being longer than the number of combinations of the requesters whereby certain orders of priority appear more than once in a cycle and different requesters have different priority to resource access during a cycle,

by logic means responsive to said signal lines and to said general requests to grant access to one of the requesters in an order of priorities that is established by the particular line carrying a signal for a step, and

by means for controlling said means for producing a signal on said lines to operate in a second predetermined sequence in which there are fewer steps than in said first set of priority orders and the relative priority of the requesters during a complete cycle is changed.

3. The priority system of Claim 2 wherein said means for producing a signal on said lines includes means for producing a signal on a line to grant access to the lowest priority requester on at least one step in each cycle.

4. The priority system of Claim 3 wherein said means for producing a signal comprises a sequential circuit having a state for each of said lines.

5. The priority system of Claim 4 wherein said means for controlling includes means for changing the order of states in said sequential circuit.

6. The priority system of Claim 5 wherein said means for controlling includes means for receiving a multi-bit code defining the order of states.

**Revendications**

1. Système de priorité utilisable dans le sous-système de canal d'un système de traitement de données comportant des moyens de signalisation de la disponibilité de ressources (33-37), des moyens de signalisation d'une demande présentée par un demandeur (30-32) pour une ou plusieurs desdites ressources, et des moyens (48-53) de comparaison des demandes et des signaux de disponibilité, et de signalisation d'une demande généralisée (ligne 39), c'est-à-dire sans identification spécifique de la ressource, présentée par le demandeur si une concordance est trouvée, caractérisé en ce qu'il comprend :

des circuits logiques et des lignes pour attribuer un cycle de fonctionnement à un demandeur sur la base d'un d'une pluralité d'ordres de priorité parmi les demandeurs, des moyens de progression pas à pas pour faire avancer les moyens de circuit suivant le cycle d'ordres de priorité, et des moyens de changement de la séquence de progression pas à pas,

des moyens répondant à une demande généralisée (39,62,63) pour l'attribution d'accès (64-66) à un demandeur sur la base d'un ordre choisi de ladite pluralité d'ordres de priorité, des moyens (72 et 73) de commande desdits moyens d'attribution, pour qu'ils fonctionnent conformément à un ordre de priorité particulier, et d'avance pas à pas desdits moyens d'attribution suivant ladite pluralité d'ordres de priorité dans laquelle un demandeur (PES sur la ligne 63) possède la plus haute priorité une seule fois et un autre demandeur (SDS1 sur la ligne 39 ou SDS2 sur la ligne 62) possède la plus haute priorité plusieurs fois, et

des moyens (69) pour signaler auxdits moyens de commande (72 et 73) qu'il faut supprimer certaines étapes choisies dans lesquelles ledit premier demandeur possède la plus haute priorité, de sorte que la priorité relative des demandeurs sur un cycle d'étapes est modifiable.

2. Système de priorité pour un système de traitement de données suivant la revendication 1, caractérisé en ce qu'il comprend :

des moyens de circuit pour chaque demandeur (30-32) afin de comparer les demandes d'accès à une ou plusieurs ressources (33-37) avec la disponibilité des ressources, et des moyens de signalisation d'une demande générale, c'est-à-dire sans identification spécifique de la ressource, pour le demandeur associé lorsqu'une concordance a été trouvée,

des moyens répondant aux signaux de demande générale venant de chacun des demandeurs (30-32) pour attribuer l'accès à un premier demandeur,

une pluralité de lignes de signal (39,62,63,69) et des moyens (figure 2) pour produire un signal sur les lignes, un par étape d'une première séquence prédéterminée, dans laquelle chaque ligne porte un signal pour une étape d'attribution de ressource dans un cycle répété d'é tapes, chaque ligne correspondant à un ordre particulier de priorité entre les demandeurs,

ladite première pluralité d'ordres de priorité étant plus longue que le nombre de combinaisons des demandeurs, de sorte que certains ordres de priorité apparaissent plus d'une fois dans un cycle et que des demandeurs différents ont une priorité différente d'accès aux ressources pendant un cycle,

des moyens logiques répondant auxdites lignes de signal et auxdites demandes générales pour attribuer l'accès à un des demandeurs dans un ordre de priorités qui est établi par la ligne particulière portant un signal pour une étape, et

des moyens de commande desdits moyens de pro duction d'un signal sur lesdites lignes afin de fonctionner suivant une deuxième séquence prédéterminée dans laquelle il y a moins d'étapes que dans ladite première pluralité d'ordres de priorité et la priorité relative des demandeurs pendant un cycle complet est modifiée.

3. Système de priorité suivant la revendication 2, dans lequel lesdits moyens de production d'un signal sur lesdites lignes comprennent des moyens de production d'un signal sur une ligne pour attribuer l'accès au demandeur de plus faible priorité lors d'au moins une étape dans chaque cycle.

4. Système de priorité suivant la revendication 3, dans lequel lesdits moyens de production d'un signal comprennent un circuit séquentiel ayant un état pour chacune desdites lignes.

5. Système de priorité suivant la revendication 4, dans lequel lesdits moyens de commande comprennent des moyens pour changer l'ordre des états dans ledit circuit séquentiel.

6. Système de priorité suivant la revendication 5, dans lequel lesdits moyens de commande comprennent des moyens pour recevoir un code multibits définissant l'ordre des états.


## Ansprüche

1. Prioritätssystem zur Verwendung im Kanalsubsystem einer Datenverarbeitungsanlage mit Mitteln zur Signalisierung der Verfügbarkeit von Betriebsmitteln (33-37), Mitteln zur Signalisierung einer Anforderung auf eines oder mehrere der Betriebsmittel durch einen Anforderer (30-32), und Mitteln (48-53), um die Anforderungen und die Verfügbarkeitssignale in Übereinstimmung zu bringen und zur Signalisierung einer generalisierten Anforderung (Leitung 39), die in bezug auf das Betriebsmittel ohne spezifische Identifikation ist, durch den Anforderer, wenn eine Übereinstimmung gefunden wird, gekennzeichnet
durch Logikschaltungen und Leitungen zur Bewilligung eines Operationszyklus an einen Anforderer auf der Basis von einer Prioritäts-Rangfolge eines Satzes von Rangfolgen unter den Anforderern, Fortschaltemittel zur schrittweisen Fortschaltung der Schaltungsmittel durch den Zyklus der Prioritäts-Rangfolge, und Mittel zur Veränderung der Fortschaltesequenz,
durch auf die generalisierte Anforderung (39, 62, 63) ansprechende Mittel zur Bewilligung eines Zugriffs (64-66) an einen Anforderer auf der Basis einer ausgewählten Rangfolge des PrioritätsRangfolgesatzes, durch Mittel (72 und 73) zur Steuerung der Bewilligungsmittel, um eine Operation entsprechend einer bestimmten Prioritäts-Rangfolge zu erzielen und zum schrittweisen Fortschalten der genannten Bewilligungsmittel durch diesen Satz von Prioritäts-Rangfolgen, in dem ein Anforderer (IOP auf Leitung 63) die höchste Priorität nur einmal hat und ein anderer Anforderer (SDS1 auf Leitung 39 oder SDS2 auf Leitung 62) die höchste Priorität mehrere Male hat, und durch Mittel (69), um den Steuermitteln (72 und 73) zu signalisieren, ausgewählte Schritte, in denen der genannte Anforderer die höchste Priorität hat, auszulassen, wodurch die relative Priorität der Anforderer über einen Zyklus von Schritten variabel gemacht wird.

2. Ein Prioritätssystem für eine Datenverarbeitungsanlage entsprechend Anspruch 1, gekennzeichnet
durch Schaltungsmittel für jeden Anforderer (30-32), um Anforderungen für einen Zugriff zu einem oder mehreren Betriebsmitteln (33-37) mit der Verfügbarkeit der Betriebsmittel in Übereinstimmung zu bringen und Mittel zur Signalisierung für den zugeordneten Anforderer einer allgemeinen Anforderung, die bezüglich des Betriebsmittels ohne spezifische Identifikation ist, wenn eine Übereinstimmung gefunden wurde,
durch auf die Signale der allgemeinen Anforderung von jedem der Anforderer (30-32) ansprechende Mittel zur Bewilligung eines Zugriffs an einen Anforderer,
durch eine Vielzahl von Signalleitungen (39, 62, 63, 39) und Mittel (Fig. 2) zur Erzeugung eines Signales auf den Leitungen, und zwar jeweils eines in einen Schritt in einer ersten vorbestimmten Sequenz, in der jede Leitung ein Signal für einen Schritt der Betriebsmittelbewilligung in einem wiederholenden Zyklus von Schritten überträgt, wobei jede Leitung einer bestimmten Rangfolge von Prioritäten unter den Anforderern entspricht,
dadurch daß der genannte erste Satz von Prioritätsrangfolgen länger ist als die Anzahl von Kombinationen der Anforderer, wodurch bestimmte Prioritätrangfolgen mehr als einmal in einem Zyklus aufscheinen und verschiedene Anforderer verschiedene Prioritäten für einen Zugriff zu dem Betriebsmittel während eines Zyklus haben,
durch Logikmittel, welche auf die Signalleitungen und auf die genannten allgemeinen Anforderungen ansprechen, um Zugriff an einen der Anforderer innerhalb einer Rangfolge von Prioritäten, die dadurch aufgestellt wird, daß eine bestimmte Leitung ein Signal für einen Schritt überträgt, zu bewilligen, und
durch Mittel zur Steuerung der Mittel zur Erzeugung eines Signales auf den genannten Leitungen, um eine Arbeitsweise in einer zweiten vorbestimmten Sequenz zu erzielen, in der weniger Schritte sind als in dem ersten Satz von Prioritätsrangfolgen und wobei die relative Priorität der Anforderer während eines kompletten Zyklus verändert wird.

3. Prioritätssystem gemäß Anspruch 2, worin die Mittel zur Erzeugung eines Signales auf den genannten Leitungen Mittel enthalten zur Erzeugung eines Signales auf einer Leitung zur Bewilligung eines Zugriffs für den Anforderer mit der niedersten Priorität während zumindest eines Schrittes in jedem Zyklus.

4. Prioritätssystem gemäß Anspruch 3, worin die genannten Mittel zur Erzeugung eines Signales eine Sequenzschaltung aufweisen, die einen Zustand für jede der Leitungen aufweist.

5. Prioritätssystem gemäß Anspruch 4, worin die genannten Mittel zur Steuerung Mittel zur Veränderung der Reihenfolge der Zustände in der Sequenzschaltung enthalten.

6. Prioritätssystem gemäß Anspruch 5, worin die genannten Mittel zur Steuerung Mittel enthalten zum Empfang eines Multi-Bitcodes, der die Reihenfolge der Zustände angibt.

FIG. 1

EP 0 118 670 B1

# FIG. 2

FIG. 3